# EUROPEAN PATENT SPECIFICATION

(11) **EP 3 431 304 B1**
(45) Date of publication and mention of the grant of the patent: **20.05.2020**
(21) Application number: 17181766.1
(22) Date of filing: 18.07.2017
(51) Int. Cl.: B42D 25/41, B42D 25/23, B42D 25/29

(54) **METHOD OF PROVIDING AN OVD ON A SECURITY DOCUMENT BY LASER MARKING**
VERFAHREN ZUR BEREITSTELLUNG EINES OVD AUF EINEM SICHERHEITSDOKUMENT DURCH LASERMARKIERUNG
PROCÉDÉ PERMETTANT DE FOURNIR UN OVD SUR UN DOCUMENT DE SÉCURITÉ PAR MARQUAGE AU LASER

(43) Date of publication of application: 23.01.2019
(73) Proprietor: Agfa-Gevaert, 2640 Mortsel (BE)
(72) Inventor: VALCKX, Nick, 2640 Mortsel (BE); GEELEN, Rene, 2640 Mortsel (BE); JUNG, Jürgen, 2640 Mortsel (BE)
(74) Representative: Viaene, Kris

(56) References cited:
- EP-A1- 2 995 465
- DE-A1- 2 163 943
- US-A1- 2006 198 987

## Description

### Technical Field

This invention relates to a method of providing an Optical Variable Device (OVD) as a security feature on a security document by laser marking.

### Background Art

Security documents, in particular security cards are widely used for various applications such as identification purposes (ID cards) and financial transfers (credit cards). Such cards typically consist of a laminated structure consisting of various plastic lamellae and layers wherein one or more of them carry visible information, such as alphanumeric information, logos and a picture of the card holder, and optionally also digital information stored in a magnetic strip or in an electronic chip (so-called smart card).

A principal objective of security documents is that they cannot be easily modified or reproduced in such a way that the modification or reproduction is difficult to distinguish from the original. For this reason, one or more security elements are incorporated in such security documents, which are difficult to reproduce.

WO2011/124485 and WO2013/037651, both from Agfa Gevaert, disclose a security document comprising a core and an overlay provided on the core. The overlay, referred to as a security laminate, comprises a biaxially stretched polyethylene terephthalate (PET) support and one or more coatings provided on the PET support.

So called Optical Variable Devices (OVDs), which change their appearance when viewed in different directions, are often used as an anti-counterfeiting security element on banknotes, credit cards and government issued identification cards. OVDs cannot be photocopied or scanned, nor can they be accurately replicated or reproduced.

Such OVDs may contain metallic layers as disclosed in for example WO2006/024478 (OVD Kinegram).

Optical variable inks (OVIs) may also be used to provide security features on security documents. An image printed with such OVIs typically displays two distinct colours depending on the viewing angle. OVIs and their use disclosed in for example EP-A 227423 (Flex Products).

Images having a metallic appearance are often used in security documents as security feature. Such images are difficult to alter or to reproduce and render the security documents therefore more difficult to counterfeit.

The incorporation of images having a metallic appearance in a security document may however involve complex preparation methods.

There is a need for more efficient, less complex methods to provide an OVD having a metallic appearance on security documents.

Patent document EP 2 995 465 A1 discloses a method of using a laser to form an invisible latent image.

### Summary of the invention

It is an object of the present invention to provide a cost effective and/or efficient method of providing an OVD on a security document, wherein the OVD has a metallic appearance, is difficult to reproduce and is created inside the security document.

This object is realized by the method according to claim 1.

Further advantages and embodiments of the present invention will become apparent from the following description.

### Brief description of the drawings

Figure 1 shows a schematic representation of an embodiment of a security document used in the method of the invention.
Figure 2 shows a schematic representation of another embodiment of a security document used in the method of the invention.
Figure 3 shows a schematic representation of still another embodiment of a security document used in the method of the invention.
Figure 4 shows a schematic representation of the observation of gloss.
Figure 5 shows an image of an OVD provided on a security card as described in Example 1 and the gloss structure spectrum of the OVD, as function of the viewing angle α₁.
Figure 6 shows an image of an unexposed part of the security card as described in Example 1 and the gloss structure spectrum of the unexposed part, as function of the viewing angle α₁.
Figure 7 shows a schematic representation of the image capture setup used in the examples to measure the gloss structure spectra.
Figure 8 shows the GDS(1) for different viewing angles.
Figure 9 shows the maxima GSD(1) as function of the different viewing angles.
Figure 10 shows the GSD(2) for different viewing angles.
Figure 11 show the maxima GSD(2) as function of the different viewing angles.

### Detailed description of the invention

### Definitions

The terms "support" and "foil", as used in disclosing the present invention, mean a self-supporting polymer-based sheet, which may be associated with one or more subbing layers. Supports and foils are usually manufactured through (co-)extrusion of polymer(s).

The term "layer", as used in disclosing the present invention, is considered not to be self-supporting and is manufactured by coating it on a support or a foil.

The term "lamella", as used in disclosing the present invention, includes one or more foils and one or more layers.

"PET" is an abbreviation for polyethylene terephthalate.

"PETG" is an abbreviation for polyethylene terephthalate glycol, the glycol indicating glycol modifiers which are incorporated to minimize brittleness and premature aging that occur if unmodified amorphous polyethylene terephthalate (APET) would be used in the production of cards.

"PET-C" is an abbreviation for crystalline PET, i.e. an oriented polyethylene terephthalate. Such a polyethylene terephthalate support has excellent properties of dimensional stability.

The definitions of security features correspond with the normal definition as adhered to in the "Glossary of Security Documents - Security features and other related technical terms" as published by the Consilium of the Council of the European Union on August 25, 2008 (Version: v. 10329.02.b.en) on its website: http://www.consilium.europa.eu/prado/EN/glossaryPopup.html.

The term "alkyl" means all variants possible for each number of carbon atoms in the alkyl group i.e. for three carbon atoms: n-propyl and isopropyl; for four carbon atoms: n-butyl, isobutyl and tertiary-butyl; for five carbon atoms: n-pentyl, 1,1-dimethylpropyl, 2,2-dimethylpropyl and 2-methyl-butyl etc.

### Method of providing an OVD on a security document by laser marking

The method of providing an OVD on a security document comprises the step of exposing the security document with a laser, the security document comprising an overlay (10) provided on a core (300), characterized in that the overlay comprises a halogenated co- or homopolymer.

In a preferred embodiment, the overlay (10) provided on the core (300) comprises a layer (200) including the halogenated co-or homopolymer provided on a transparent support (100).

### Optical Variable Device

An Optically Variable Device (OVD) is a security feature whose appearance changes as function of viewing conditions. The OVD itself does not change, but how it interacts with light and viewing conditions makes it seem to vary to an observer. For example, the appearance of the OVD may change as function of the viewing angle.

The appearance of the OVD prepared with the method according to the invention indeed changes as function of the viewing angle. The OVD has a gloss structure, which varies as function of the viewing angle. The gloss structure is the result of small areas, referred to herein as gloss structure elements, which have a higher gloss than other areas, under a given viewing angle.

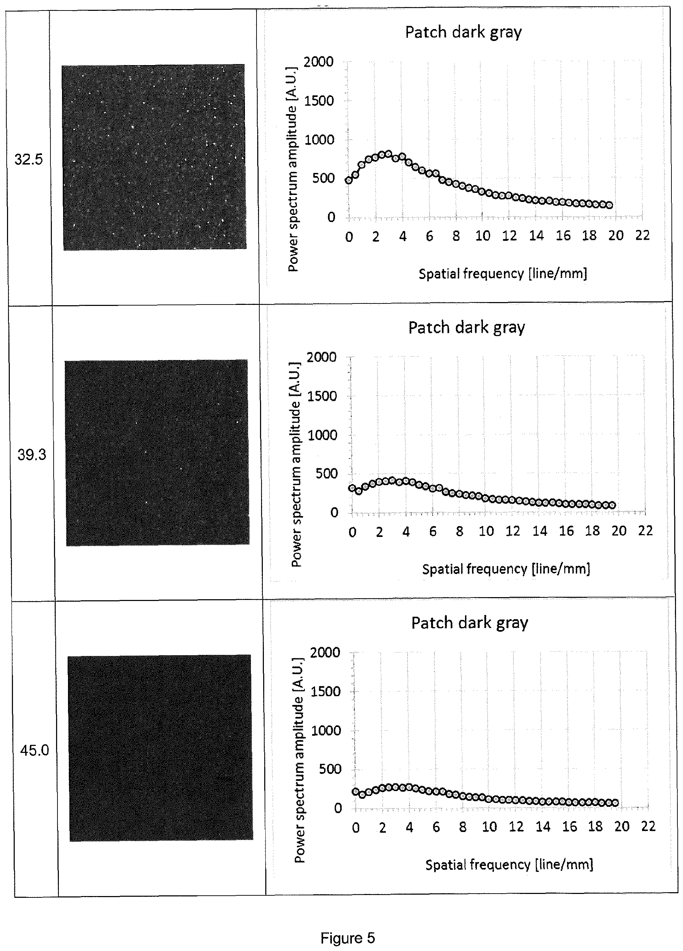

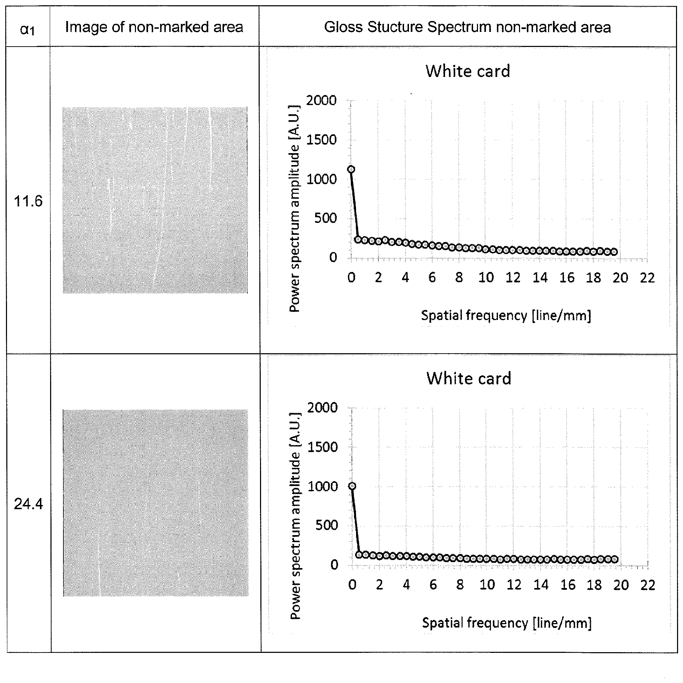

This is illustrated in Figure 5 for different viewing angles. The "lighter spots" in the images of the OVD are the gloss structural elements. Those gloss structure elements have a lighter appearance due to their higher reflection.

It is also clear from Figure 5 that the appearance of the gloss structural elements in the OVD changes with viewing angle α.

The laser marking method of the present invention seems to locally change the structure or at least the refracting index in the exposed area of the security document resulting in the occurrence of the gloss structural element in the OVD.

The OVD obtained with the method of the present invention may be characterized by a gloss structure spectrum. The method for obtaining such a gloss structure spectrum is described in detail in example 3. In Figure 5, the gloss structure spectra of the OVDs are also given as function of the viewing angle α.

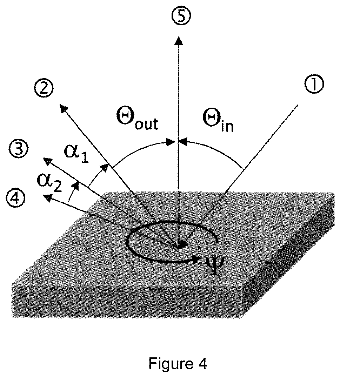

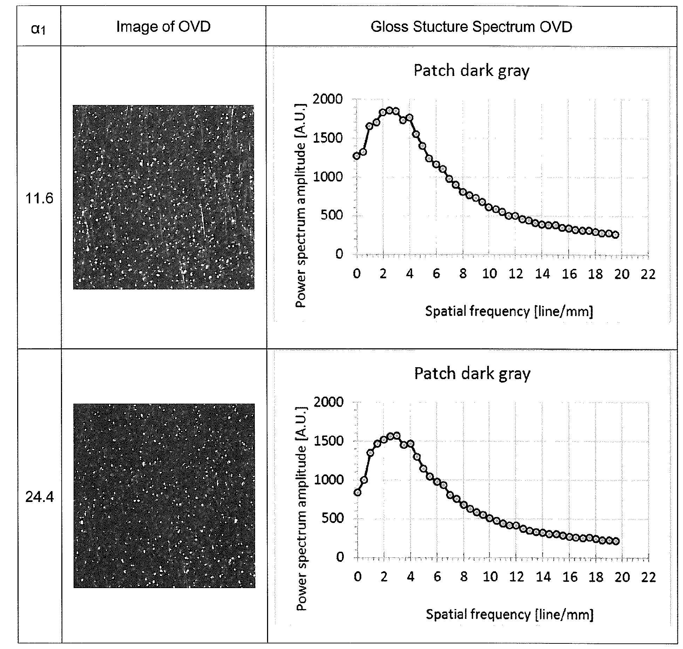

To characterize gloss features of a material, the relative orientation of the light source, the material under inspection and the human observer needs to be defined, as schematically represented in Figure 4.

In Figure 4, (1) represents an incident direction of light; (5) represents the surface normal of the material under investigation; (2) represent the outbound direction of the macroscopic gloss; (3) represents a first observation direction; and (4) represents a second observation direction.

For a given incident direction of light versus the surface normal of the material (Θᵢₙ), the outbound direction of macroscopic gloss follows the geometry of mirror reflection (Θₒᵤₜ = Θᵢₙ), also defining the plane of reflection. The observer may inspects the gloss structure under any angle α₁ versus the macroscopic gloss reflection in-plane or out-of-plane, the latter additionally characterized by Ψ.

Variation of the observation angle versus the macroscopic gloss direction may be realized by tilting any of the three elements: light source, observer and material under inspection. For a given observation angle α₁, the observer may for example inspect the difference of gloss structure of an exposed area, the OVD, versus a non-exposed area. Or, the observer may inspect differences of gloss structure of an exposed area by dynamically tilting between two observation angles, with a delta angle α₂ between these observation angles.

In the method for obtaining the gloss structure spectra described in the examples, the direction of camera inspection was chosen along the surface normal of the material to guarantee that the surface area under inspection was within depth of focus of the camera system. In this case the camera observation angle α₁ becomes identical to the angle defined by the direction of the macroscopic gloss (Θₒᵤₜ), which in the measurement sequence is controlled by tilting of the light source (Θᵢₙ). The light source for illumination of the surface had a divergence of 18° +/- 4° as defined by its full opening angle.

To characterize the OVD provided by the method of the invention, the following definitions are used hereinafter:
**OVD** is an exposed area of the security document;
**α** is an observation angle, i.e. the angle between the observation direction and the direction of the macroscopic gloss reflection (for example α₁ in Figure 4).
**delta α** is the angle between two observation directions (for example α₂ in Figure 4). **GSD(1)** is a ratio of a gloss structure spectrum of the OVD versus the gloss structure spectrum of a non-exposed area of the security document, both measured under the same observation angle (this ratio is thus obtained by dividing the gloss structure spectrum of the OVD by the gloss structure spectrum of the non-exposed area of the security document).
**GSD(2)** is the ratio of the gloss structure spectrum of the OVD at one observation angle α versus the gloss structure spectrum at any other observation angle α (this ratio is thus obtained by dividing the gloss structure spectrum of the OVD at one observation angle α by the gloss structure spectrum at the other observation angle α).

GSD(1) reflects a quantitative evaluation of the gloss structure of the OVD in comparison with non-exposed areas of the security document, while GSD(2) is a quantitative evaluation of the variation of the gloss structure of the OVD as function of the observation angle.

The OVD provided by the method of the invention preferably has a maximum value of GSD(1) over any observation angle α of at least 2, more preferably at least 4, most preferably at least 8.

The OVD provided by the method of the invention preferably has a maximum value of GSD(2) for any delta α of at most 10 degrees of at least 2, more preferably at least 3, most preferably at least 4, particularly preferred at least 6.

Upon use of the security document, its surface may be subject to abrasive conditions introducing wear, such as e.g. surface scratches. This results in lowering the sheen gloss value in comparison to its initial value. However, even in such wear condition, visual gloss structure differentiation between imaged and non-imaged areas is still possible, but the ratio of gloss structure between imaged and non-imaged area may become smaller. Preferably, the security document used on the method according to the invention has a glossy surface, i.e. a surface having a 60° gloss value in the range 70 - 85 GU, or a high glossy surface, i.e. a surface having a 60° gloss value of more than 85 GU). However, the method may still be used with security documents having a semi-gloss surface, i.e. a surface having a 60° gloss value in the range 35-70 GU, and even with a surface having a 'satin-like' gloss finish, i.e. a surface having a 60° gloss value in the range 20-35 GU (See ASTM D 523 for a definition of gloss measurements).

In a preferred embodiment of the method according to the invention, there is no haptic differentiation between the OVD and non-exposed areas of the security document.

Haptic relates to the sense of touch. A haptic differentiation is typically evaluated by rubbing with a fingertip over the surface to be investigated. A haptic differentiation may relate to the surface structure, a relief, or a different surface friction.

As an indirect measure of haptic differentiation between an exposed and a non-exposed area, the relative change of sheen gloss (i.e. shininess at grazing angles) of the exposed and non-exposed areas may be used, as sheen gloss is a visual measure of surface roughness.

For more information on haptic versus visual assessment of surfaces see WouterM. Bergmann Tiest, Astrid M.L. Kappers; Haptic and visual perception of roughness, Helmholtz Institute, Utrecht University, Princetonplein 5, 3584 CC Utrecht, The Netherlands*.*

In this context, sheen gloss is measured as 85° specular gloss.

The ratio of the sheen gloss of the OVD versus non-exposed areas of the security document is preferably between 0.8 and 1.2, more preferably between 0.85 and 1.15, most preferably between 0.9 and 1.1, particularly preferred between 0.95 and 1.05.

Providing an OVD on a security document my means of laser marking enables to formation of the OVD "inside" the security document.

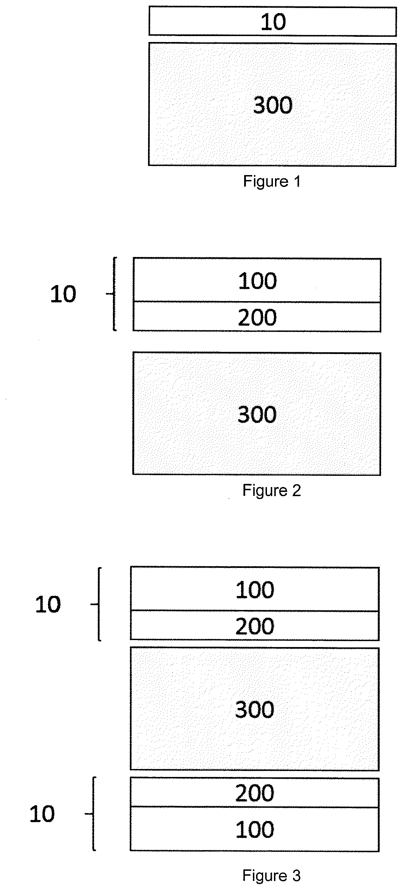

For example in the embodiment shown in Figures 2 and 3, wherein the security document comprises an overlay (10) provided on a core (300), and wherein the overlay comprises an adhesive layer (200) provided on a transparent support (100), laser marking is carried out through the transparent support. The laser marked OVD is then formed in the adhesive layer, or at the interface of the adhesive layer and the core, the support, or another layer on the adhesive layer. The surface of the security document, i.e. the outer surface of the support (100), is thus not altered upon laser exposure. This results in the absence of a haptic differentiation between the OVD and non-exposed areas of the security document.

The fact that the OVD is formed "inside" the security document makes it even more difficult to counterfeit. In addition, the OVD is protected from the environment.

Providing an OVD by laser marking also has the advantage that the OVD may be applied at the very end of the manufacturing process of the security document, enabling more flexibility with respect to the content of the OVD to be provided on the security document.

In the method of the present invention, the OVD may be created during the personalization step after lamination of the overlay on the core, and not prior to the lamination.

In addition, the OVD may be personalized by laser marking, making it even harder to counterfeit. Examples of such OVDs are card number, names, pictures, etc.

Also, the OVD may be the ghost image or watermark of the picture of the card holder. In another example, the OVD may be the contour of a country, in which personalization can be done through card number, name of the card holder, location, etc.

The OVD may also comprise a QR code.

The gloss structure of the OVD may be isotropic or non-isotropic by selection of appropriate laser marking parameters. Examples of non-isotropic OVD include formation of lines of gloss structural elements or laser marking a gloss dithering pattern.

The OVD produced by the method of the invention preferably has a colour density.

In principle any colour may be formed, however a neutral (grey) colour is preferred.

The OVD preferably has a metallic look, i.e. having a colour comparable to the colour of for example platinum, silver or aluminium. Therefore, the L* value of the OVD is preferably between 30 to 80, more preferably between 40 to 70, most preferably between 55 and 65.

The difference in visual density between the OVD and non-exposed areas of the security document (delta Dvis) is preferably at least 0.15, more preferably at least 0.30, most preferably at least 0.50. The delta Dvis has to be high enough to be viewed by the observer. However, a too high density may disguise the gloss structure of the OVD and may need a too high laser energy. Also, when delta Dvis is too low or too high, simulating a metallic look becomes less obvious.

For obtaining a colour different from grey or black, colour forming agents, such as leuco dyes, are preferably added to the overlay. However, the overlay preferably does not contain a substantial amount of leuco dye, most preferably the overlay does not contain a leuco dye.

Colour differences between imaged and non-imaged areas are measured with a spectrophotometer having a 45°/0° geometry and are expressed in delta Dvis, which is the difference of visual density Dvis of both areas under comparison. Dvis is evaluated using the visual brightness curve as weighting function (V_{λ} = CIE colour matching function "y bar" for 2 degree observer).

### Overlay

The overlay comprises a halogenated co- or homopolymer.

In a preferred embodiment, the overlay (10) comprises an adhesive layer (100) provided on a support (200), the adhesive layer including the halogenated co- or homopolymer.

The overlay according to this embodiment is then preferably laminated on the core (300), thereby forming the security document.

The overlay may be laminated on one or both sides of the core, as shown in Figure 2.

In another embodiment, the adhesive layer (100) containing the halogenated co- or homopolymer is coated directly on the core. The coating composition of the adhesive layer can be coated using any conventional coating technique, such as dip coating, knife coating, extrusion coating, spin coating, slide hopper coating and curtain coating on the support.

Another layer or foil may then be applied on the coated adhesive layer.

In still another embodiment, the overlay (10) is co-extruded together with the core.

### Halogenated co-or homopolymer

The security document comprises an overlay, the overlay including a halogenated co-or homopolymer.

The halogenated co-or homopolymer is preferably a chlorinated of fluorinated co- or homopolymer.

Preferred chlorinated of fluorinated co- or homopolymers are based on the polyethylene structure, where hydrogen atoms are replaced by the halogen atoms.

Preferred chlorinated co-or homopolymers are co-or homopolymers of vinylchloride, vinylidenechloride, or chloroprene.

Preferred fluorinated co- or homopolymers are co-or homopolymers of tetrafluoroethylene, vinylfluoride, or chlorotrifluoroethylene.

In a most preferred embodiment, the halogenated co-or homopolymer is a co-or homopolymer of vinylchloride.

A highly preferred vinylchloride copolymer is a copolymer of vinylchloride and vinylacetate.

The vinylchloride-vinylacetate copolymer preferably also comprise a hydroxyl functional monomer. The hydroxyl functional monomer is preferably selected from the group consisting of vinyl alcohol, hydroxypropyl acrylate, hydroxyethyl acrylate, and hydroxyethyl-methacrylate.

The amount of vinyl chloride is preferably at least 85 wt% of vinyl chloride, more preferably at least 90 wt% of vinyl chloride and most preferably at least 92 wt% of vinyl chloride based on the total weight of the polymer.

Preferred copolymers of vinylchloride and vinylacetate are the Solbin® resins commercially available from Shin Etsu such as for example: Solbin® A, which is a copolymer of 92 wt% vinylchloride, 3 wt% vinylacetate, 5 wt% vinylalchohol; Solbin® AL, which is a copolymer of 93 wt% vinylchloride, 2 wt% vinylacetate, 5 wt% vinylalchohol; Solbin® TA2, which is a copolymer of 83 wt% vinylchloride, 4 wt% vinylacetate, 13 wt% hydroxyalkyl acrylate; Solbin® TA3, which is a copolymer of 83 wt% vinylchloride, 4 wt% vinylacetate, 13 wt% hydroxyalkylacrylate , Solbin® TAO, which is a copolymer of 91 wt% vinylchloride, 2 wt% vinylacetate, 7 wt% vinyl alcohol.

Other preferred copolymers of vinylchloride and vinylacetate are the Vinnol® type resins from Wacker Chemie such as for example Vinnol® H 5/50 A,which is a copolymer of 90 wt% vinylchloride, 4 wt% vinylacetate, 6 wt% vinyl alcohol.

Still other preferred copolymers of vinylchloride and vinylacetate are the Sunvac® type resins from Yantai Suny Chem International such as for example: Sunvac® GH, which is a copolymer of 90 wt% vinylchloride, 4 wt% vinylacetate, 6 wt% vinyl alcohol; Sunvac® GF, which is a copolymer of 81 wt% vinylchloride, 4 wt% vinylacetate, 15 wt% hydroxylalkyl acrylate; and Sunvac® OH, which is a copolymer of 81 wt% vinylchloride, 4 wt% vinylacetate, 15 wt% hydroxylalkyl acrylate.

### Support

The overlay preferably comprises a support (Figure 2, 100), more preferably a transparent polymeric support.

Suitable transparent polymeric supports include cellulose acetate propionate or cellulose acetate butyrate, polyesters such as polyethylene terephthalate and polyethylene naphthalate, polyamides, polycarbonates, polyimides, polyolefins, polyvinylchlorides, polyvinylacetals, polyethers and polysulphonamides.

The support is preferably an oriented polyester support. Orienting a polyester support is achieved by stretching the support in a longitudinal direction, a transversal direction or both directions. The highest crystallinity of the polyester support is obtained by biaxially stretching.

The polyester is preferably biaxially stretched with a stretching factor of at least 2.0, more preferably at least 3.0 and most preferably a stretching factor of about 3.5. The temperature used during stretching is preferably at least 100°C, more preferably at least 140°C and most preferably about 160°C.

The oriented polyester support is preferably a polyethylene terephthalate or a polyethylene napthalate support.

In the most preferred embodiment, the oriented polyester support is a biaxially stretched polyethylene terephthalate support. Such a polyethylene terephthalate support has excellent properties of dimensional stability and is very durable and resistant to scratches and chemical substances.

The biaxially stretched polyethylene terephthalate substrate should be sufficiently thick to be self-supporting, but thin enough to be flexed, folded or creased without cracking. Preferably, the biaxially stretched polyethylene terephthalate substrate has a thickness of between about 7 µm and about 100 µm, more preferably between about 10 µm and about 90 µm, most preferably between about 25 µm and about 80 µm.

The manufacturing of PET-C foils and supports is well-known in the art of preparing suitable supports for silver halide photographic films. For example, GB 811066 (ICI) teaches a process to produce biaxially oriented polyethylene terephthalate foils and supports.

The support preferably comprises subbing layers to improve the adhesion between the support and layers provided thereon.

### Subbing Layers

The support (100) preferably comprises subbing layers to improve the adhesion between the support and layers provided thereon.

Useful subbing layers for this purpose are well known in the photographic art and include, for example, polymers of vinylidene chloride such as vinylidene chloride/acrylonitrile/acrylic acid terpolymers or vinylidene chloride/methyl acrylate/itaconic acid terpolymers.

Suitable vinylidene chloride copolymers include: the copolymer of vinylidene chloride, N-tert.-butylacrylamide, n-butyl acrylate, and N-vinyl pyrrolidone (e.g.70:23:3:4), the copolymer of vinylidene chloride, N-tert.-butylacrylamide, n-butyl acrylate, and itaconic acid (e.g. 70:21:5:2), the copolymer of vinylidene chloride, N-tert.-butylacrylamide, and itaconic acid (e.g. 88:10:2), the copolymer of vinylidene chloride, n-butylmaleimide, and itaconic acid (e.g. 90:8:2), the copolymer of vinyl chloride, vinylidene chloride, and methacrylic acid (e.g. 65:30:5), the copolymer of vinylidene chloride, vinyl chloride, and itaconic acid (e.g. 70:26:4), the copolymer of vinyl chloride, n-butyl acrylate, and itaconic acid (e.g. 66:30:4), the copolymer of vinylidene chloride, n-butyl acrylate, and itaconic acid (e.g. 80:18:2), the copolymer of vinylidene chloride, methyl acrylate, and itaconic acid (e.g.90:8:2), the copolymer of vinyl chloride, vinylidene chloride, N-tert.-butylacrylamide, and itaconic acid (e.g. 50:30:18:2). All the ratios given between brackets in the above-mentioned copolymers are ratios by weight.

In a preferred embodiment, the support is provided with a subbing layer including a copolymer selected from the group consisting of a hydroxyl-functional, partially-hydrolyzed vinyl chloride/vinyl acetate copolymer and a polyester-urethane.

In a particular preferred embodiment, the support is provided with a subbing layer including a binder based on a polyester-urethane copolymer.

In a more preferred embodiment, the polyester-urethane copolymer is an ionomer type polyester urethane, preferably using polyester segments based on terephthalic acid and ethylene glycol and hexamethylene diisocyanate.

A suitable polyester-urethane copolymer is Hydran™ APX101H from DIC Europe GmbH.

The application of subbing layers is well-known in the art of manufacturing polyester supports for silver halide photographic films. For example, the preparation of such subbing layers is disclosed in US3649336 (AGFA) and GB 1441591 (AGFA).

In a preferred embodiment, the subbing layer has a dry thickness of no more than 2 µm or preferably no more than 200 mg/m².

A preferred method of providing the subbing layers on the support is disclosed in EP-A 2374602 an EP-A 2567812, both from Agfa Gevaert.

A preferred method comprises the steps of a) stretching a polyester substrate in either a longitudinal or a transversal direction; b) coating and drying a subbing layer on the stretched polyester substrate ; c) stretching the coated polyester substrate in the longitudinal or transversal direction not selected in step a) in order to obtain a coated biaxially stretched polyester substrate having a subbing layer.n

### Adhesive layer

The overlay preferably comprises an adhesive layer.

The adhesive layer preferably comprises the halogenated co-or homopolymer described above as a first polymer.

The adhesive layer may further comprise a second polymer.

In a preferred embodiment, the second polymer is a copolymer of vinyl butyral, vinyl acetate and vinyl alcohol containing preferably at least 60 mol% of vinyl butyral, more preferably at least 65 mol% of vinyl butyral and most preferably at least 70 mol% of vinyl butyral and preferably at most 40 mol% of vinyl alcohol, more preferably at most 30 mol% of vinyl alcohol and most preferably at most 26 mol% of vinyl alcohol. The vinyl acetate content in the second polymer is preferably at most 5 mol%, more preferably at most 3 mol%.

Suitable copolymers of vinyl butyral, vinyl acetate and vinyl alcohol are the S-Lec™ grades from SEKISUI.

In another preferred embodiment, the second polymer is a copolymer of styrene, butadiene and methylmethacrylate. A suitable copolymer of styrene, butadiene and methylmethacrylate is Zylar™ 631 from INEOS.

The total amount of polymeric binder of the adhesive layer is preferably between 3 and 30 g/m², more preferably between 5 to 20 g/m².

In a preferred embodiment, the thickness of the adhesive layer is between 1 µm and 12 µm.

As described above, the adhesive layer comprising the halogenated co- or homopolymer may be coated on a support (100) to form an overlay, which is then laminated on a core (300), or the adhesive layer is coated directly on a core.

The coating composition of the adhesive layer can be coated using any conventional coating technique, such as dip coating, knife coating, extrusion coating, spin coating, slide hopper coating and curtain coating on the support.

The coating composition of the adhesion layer may contain one or more organic solvents. A preferred organic solvent is methylethylketone (MEK) because it combines a high solubilizing power for a wide range of ingredients and it provides a good compromise between the fast drying of the coated layer and the danger of fire or explosion thereby allowing high coating speeds.

The adhesive layer may however also be coated from an aqueous coating solution. Such aqueous coating solution are often preferred for health and safety reasons.

For such aqueous coating solutions, watersoluble or waterdispersible halogenated co-or homopolymers are preferably used. An example of an aqueous polyvinylchloride dispersion is SolVin 068SA. Examples of aqueous polyvinylidene dispersions are the DARAN® PVCD dispersions from Owensboro Specialty Polymers and the DIOFAN® PVDC dispersions from Solvay.

A preferred overlay comprising an adhesive layer, and its preparation method is disclosed in WO2011/124485 and WO2013/037651, both from Agfa Gevaert.

### Laser additives

The security document may include a so-called laser additive, which renders the security document more sensitive to laser radiation, i.e. the OVD may then be formed at lower laser exposures, or higher visual densities are obtained.

The laser additive may be added to the core of the security document, however it is preferably added to the overlay, more preferably to the adhesive layer of the overlay.

It is however important that the laser additive does not impart unwanted background colouration to the security document. This may realized by using only small amounts of the laser additive and/or selecting laser additives that has minimal absorption in the visible region of the spectrum.

Suitable laser additives include antimony metal, antimony oxide, carbon black, mica (sheet silicate) coated with metal oxides and tin-antimony mixed oxides. In WO 2006/042714, the dark coloration of plastics is obtained by the use of additives based on various phosphorus-containing mixed oxides of iron, copper, tin and/or antimony.

Suitable commercially available laser additives include mica coated with antimony-doped tin oxide sold under the trade name of Lazerflair™ 820 and 825 by MERCK; copper hydroxide phosphate sold under the trade name of Fabulase™ 322 by BUDENHEIM; aluminium heptamolybdate sold under the trade name of AOM™ by HC STARCK; and antimony-doped tin oxide pigments such as Engelhard Mark-it™ sold by BASF.

In a preferred embodiment the laser additive is carbon black. This avoids the use of heavy metals in manufacturing these security documents. Heavy metals are less desirable from an ecology point of view and may also cause problems for persons having a contact allergy based on heavy metals.

Suitable carbon blacks include Special Black 25, Special Black 55, Special Black 250 and FarbrussT^{M} FW2V all available from EVONIK; Monarch™ 1000 and Monarch™ 1300 available from SEPULCHRE; and Conductex™ 975 Ultra Powder available from COLUMBIAN CHEMICALS CO.

The use of carbon black pigments as laser additives may lead to an undesired background colouring of the security document precursor. For example, a too high concentration of carbon black in the adhesive layer of the security document having a white core may result in grey security documents. For that reason it is preferred to use carbon black particles having a numeric average particle size smaller than 300 nm, preferably between 5 nm and 250 nm, more preferably between 10 nm and 100 nm and most preferably between 30 nm and 60 nm. The average particle size of carbon black particles can be determined with a Brookhaven Instruments Particle Sizer BI90plus based upon the principle of dynamic light scattering.

Infrared absorbing dyes having substantial no absorption in the visible region may also be used as laser additives. Such dyes, as disclosed in for example WO2014/057018 (Agfa Gevaert), are particular suitable for use with a NIR laser, for example with a 1064 nm laser.

The adhesive layer of the overlay may include other ingredients, for example surfactants to enhance the coating quality. The surfactant is preferably an anionic or non-ionic surfactant.

### Outer layer

The overlay may also comprise an outer layer provided at a side of the support opposite to the side of the support upon which the adhesive layer is provided.

Such an outer layer is preferably an ink receiving layer or a receiver layer for Dye Diffusion Thermal Transfer (D2T2) printing.

The presence of such a layer enables the addition of information or other security information to the security document by for example inkjet printing or D2T2 printing.

### Core

The security document comprises a core.

The core can be transparent, translucent or opaque.

The core is preferably opaque. The advantage of an opaque core, preferably of a white colour, is that any information of the security document is more easily readable and that a colour image is more appealing by having a white background.

Suitable polymers for the core of the security document include cellulose acetate propionate or cellulose acetate butyrate, polyesters such as polyethylene terephthalate and polyethylene naphthalate, polyamides, polycarbonates, polyimides, polyolefins, polyvinyl chlorides, polyvinylacetals, polyethers and polysulphonamides.

Preferred polymeric cores are based on polycarbonate (PC), polyvinylchloride (PVC), and polyethylene terephthalate (PET).

Other preferred cores are based on so-called synthetic papers such as Synaps™ or Teslin® synthetic papers, respectively from Agfa Gevaert and Teslin.

The core may also be based on paper, such as polyethylene or propylene coated paper.

The core may be a single component extrudate, but can also be co-extrudate.

Examples of suitable co-extrudates are PET/PETG and PET/PC.

Instead of a coloured or whitened support, an opacifying layer can be coated onto a transparent support. Such opacifying layer preferably contains a white pigment with a refractive index greater than 1.60, preferably greater than 2.00, and most preferably greater than 2.60. The white pigments may be employed singly or in combination. Suitable white pigments include C.I. Pigment White 1, 3, 4, 5, 6, 7, 10, 11, 12, 14, 17, 18, 19, 21, 24, 25, 27, 28 and 32. Preferably titanium dioxide is used as pigment with a refractive index greater than 1.60. Titanium oxide occurs in the crystalline forms of anatase type, rutile type and brookite type. In the present invention the rutile type is preferred because it has a very high refractive index, exhibiting a high covering power.

Methods to obtain opaque polyethylene terephthalate and biaxially oriented films thereof of have been disclosed in, e.g. US 2008238086 (AGFA).

### Security Document

The security document referred to herein may be any security document, i.e. a document, which is to be difficult to counterfeit. Such documents may be official documents like ones driver licence, passport, or identity card.

The security document may however also be a banknote or a packaging, the latter containing security features to prevent counterfeiting of the packaged goods.

Preferred security documents are security cards, which are widely used for various applications such as identification purposes (ID cards) and financial transfers (credit cards).

The security document may include an electronic chip and optionally an antenna.

In a preferred embodiment the security document is a so-called radio frequency identification card or RFID-card.

In addition to the OVD provided by the method according to the present invention, the security document may contain other security features, such as anti-copy patterns, guilloches, endless text, miniprint, microprint, nanoprint, rainbow colouring, 1D-barcode, 2D-barcode, coloured fibres, fluorescent fibres and planchettes, fluorescent pigments, kinegrams™, overprint, relief embossing, perforations, metallic pigments, magnetic material, Metamora colours, microchips, RFID chips, images made with OVI (Optically Variable Ink) such as iridescent and photochromic ink, images made with thermochromic ink, phosphorescent pigments and dyes, watermarks including duotone and multitone watermarks, ghost images and security threads.

The security document may also contain OVDs provided with other techniques.

A combination with one of the above security features increases the difficulty for falsifying a security document.

### Laser marking

An image having a metallic look is provided on the security document by exposing it to a laser.

The laser is preferably a UV laser or an IR laser, more preferably an IR laser.

An UV laser has its emission wavelength in the UV region.

Preferred UV lasers have an emission wavelength between 250 and 450 nm, more preferably between 300 and 400 nm.

Preferred UV laser are the commercially available InGaN-based semiconductor laser diodes having a wavelength of approximately 405 nm.

An IR laser has its emission wavelength in the infrared (IR) region.

The infrared laser may be a continuous wave or a pulsed laser.

For example a CO₂ laser, a continuous wave, high power infrared laser having an emission wavelength of typically 10600 nm (10.6 micrometer) may be used.

CO₂ lasers are widely available and cheap. A disadvantage however of such a CO₂ laser is the rather long emission wavelength, limiting the resolution of the laser marked information.

To produce high resolution laser marked data, it is preferred to use a near infrared (NIR) laser having an emission wavelength between 780 and 2500, preferably between 800 and 1500 nm in the laser marking step.

A particularly preferred NIR laser is an optical pumped semiconductor laser. Optically pumped semiconductor lasers have the advantage of unique wavelength flexibility, different from any other solid-state based laser. The output wavelength can adjusted allowing a perfect match between the laser emission wavelength and the absorption maximum of an optothermal converting agent present in the laser markable layer.

A preferred pulsed laser is a solid state Q-switched laser. Q-switching is a technique by which a laser can be made to produce a pulsed output beam. The technique allows the production of light pulses with extremely high peak power, much higher than would be produced by the same laser if it were operating in a continuous wave (constant output) mode, Q-switching leads to much lower pulse repetition rates, much higher pulse energies, and much longer pulse durations.

### EXAMPLES

### Materials

All materials used in the following examples were readily available from standard sources such as ALDRICH CHEMICAL Co. (Belgium) and ACROS (Belgium) unless otherwise specified. The water used was deionized water.

**Hydran™ APX101H** is a waterbased liquid of ionomer type polyester urethane using polyester segments based on terephthalic acid and ethylene glycol and hexamethylene diisocyanate available from DIC Europe GmbH.

**Resorcinol** from Sumitomo Chemicals.

**Resor-sol** is a 7.4 wt% aqueous solution of resorcinol (pH 8).

**Par** is a dimethyltrimethylolamine formaldehyde resin from Cytec industries.

**PAR-sol** is a 40wt% aqueous solution of Par.

**PEA** is Tospearl 120 from Momentive Performance materials.

**PEA-sol** is a 10wt% (50/50) aqueous/ethanol dispersion of PEA.

**Dowfax™ 2A1** from Pilot Chemicals C is a Alkyldiphenyloxide disulfonate (4.5%wt%).

**DOW-sol** is a 2.5wt% solution of **Dowfax™ 2A1** in isopropanol.

**Solbin™ A** is a copolymer of 92% vinyl chloride, 3% vinyl acetate and 5% vinyl alcohol from NISSIN CHEMICAL Co.

**Solbin™ AL** is a copolymer of 93% vinyl chloride, 2% vinyl acetate and 5% vinyl alcohol from NISSIN CHEMICAL Co.

**Solvin™** 557 RB is a copolymer of 90% vinyl chloride and 10% vinyl acetate from SOLVAY.

**Sunvac™ LPOH** is a copolymer of 90% vinyl chloride, 4 % vinyl acetate and 6% vinyl alcohol from WUXI HONGHUI CHEMICAL.

**S-Lec™ BL-10** is a polyvinyl butyral copolymer including a hydroxyl content of 26 mol%, a buytyral content of at least 71 mol% and an acetal of maximum 3 mol% available from SEKISUI.

**Tospearl™ 145** is a polymethylsilsesquioxane with an average particle size 4.5 µm from GENERAL ELECTRIC.

**PVC-1** is a polyvinylchloride core (thickness = 320 µm) commercially available as White card core ADE-14 from TIANJIN WEIJIA

**PVC-2** is a polyvinylchloride core (thickness = 320 µm) commercially available as Pentaprint®PVC from KLOCKNER PENTAPLAST.

**PVC-3** is a polyvinylchloride core (thickness = 320 µm) commercially available from JIANGSU HUAXIN NEW MATERIALS.

**PETG-1** is a PETG core (thickness = 320 µm) commercially available as PETG-T0001 from WOLFEN.

**PETG-2** is a PETG core (thickness = 320 µm) commercially available as SP-180YS from JIANGSU HUAXIN NEW MATERIALS.

**Teslin® SP600,** a synthetic paper (thickness = 152 µm) commercially available from TESLIN.

**PET/PE,** is a PET/polyethylene overlay (thickness = 75-75 µm).

### Example 1

### Preparation of PET-1

A coating composition SUB-1 was prepared by mixing the components according to Table 1 using a dissolver.

**Table 1**

| **Components of SUB-1** | **Volume (L)** |
|---|---|
| deionized water | 700.9 |
| Hydran™APX101H | 146.6 |
| Resor-sol | 125.0 |
| PAR-sol | 5.0 |
| PEA-sol | 7.5 |
| DOW-sol | 15.0 |

After stretching a 1100 µm thick polyethylene terephthalate substrate longitudinally, the coating composition SUB-1was coated onto the longitudinally stretched PET and dried.

The coated longitudinally stretched PET was then transversally stretched to produce a 63 µm thick transparent and glossy subbed biaxially stretched polyethylene terephthalate substrate PET-1.

The dry thickness of the subbing layer coated from SUB-1 was 211 mg/m².

### Preparation of the overlay OL-01

The overlay OL-01 was obtained by applying a coating solution obtained by mixing the ingredients according to Table 2 using a dissolver on the subbed PET-C support PET-1 at a wet coating thickness of 80 µm and subsequently dried for 2 minutes at 20°C on the film applicator and for a further 15 minutes in an oven.

**Table 2**

| **Component** | **g** |
|---|---|
| MEK | 280 |
| Solbin™ A | 35 |
| Tospearl™145 | 0.2 |
| S-lec BL10 | 12 |

### Preparation of the Security Documents SD-01 to SD-18

The security documents SD-01 to SD-18 were prepared by laminating the overlay OL-01 on the CORE supports according to Table 3. The lamination was performed using an Oasys OLA6/7 plate laminator with the settings: LPT = 115°C, LP = 40, Hold = 210 sec, HPT = 115°C , HP = 40 and ECT = 50°C.

### Laser marking the security documents SD-01 to SD-14

The security documents SD-01 to SD-14 were laser marked using a Rofin RSM Powerline E laser (10 W) with settings 33 ampere and 33 kHz at 100% power.

The laser marking results are shown in Table 3. The laser marked image was visually evaluated. Grey in Table 3 stands for a grey, neutral colour while metallic stands for a metallic appearance of the laser marked image.

**Table 3**

| **Security Document** | **CORE support** | **Overlay** | **Laser marked image** |
|---|---|---|---|
| SD-01 | PVC-1 | - | Grey |
| SD-02 | PVC-1 | OL-01 | Metallic |
| SD-03 | PVC-1 | PET/PE | No |
| SD-04 | PVC-2 | - | Grey |
| SD-05 | PVC-2 | OL-01 | Metallic |
| SD-06 | PVC-3 | - | Grey |
| SD-07 | PVC-3 | OL-01 | Metallic |
| SD-08 | PETG-1 | - | Grey |
| SD-09 | PETG-1 | OL-01 | Metallic |
| SD-10 | PETG-1 | PET/PE | Grey |
| SD-11 | PETG-2 | - | Grey |
| SD-12 | PETG-2 | OL-01 | Metallic |
| SD-13 | Teslin SP600 | - | Light Grey |
| SD-14 | Teslin SP600 | OL-01 | Metallic |

It is clear from the results in Table 3 that an image having a metallic appearance was obtained by exposing the security documents comprising an overlay laminated on a core support, wherein the overlay comprises a layer including a vinyl chloride copolymer.

### Example 2

### Preparation of the coating compositions CC-01 to CC-08

The coating compositions CC-01 to CC-08 were prepared by mixing together the components according to Table 4 using a dissolver.

**Table 4**

| **Component (g)** | **CC-1** | **CC-2** | **CC-3** | **CC-4** | **CC-5** | **CC-6** | **CC-7** | **CC-8** |
|---|---|---|---|---|---|---|---|---|
| MEK | 750 | 720 | 725 | 695 | 675 | 680 | 735 | 710 |
| Solbin™ A | 70 | = | = | - | - | - | - | - |
| Solbin™ AL | - | - | - | 125 | = | = | - | - |
| Solvin™ 557RB | - | - | - | - | - | - | 85 | - |
| Sunvac™ LPOH | - | - | - | - | - | - | - | 110 |
| Tospearl™ 145 | 0.05 | = | = | = | = | = | = | = |
| S-lec BL10 | - | 30 | 25 | - | 45 | 40 | - | - |
| Carbon Black | - | - | 0.2 | - | - | 0.5 | - | - |

### Preparation of the overlays OL-02 to OL-09

The coating compositions CC-1 to CC-8 were coated with an Elcometer Bird Film Applicator (from ELCOMETER INSTRUMENTS) on the subbed PET-C support PET-1 at a wet coating thickness of 80 µm and subsequently dried for 2 minutes at 20°C on the film applicator and for a further 15 minutes in an oven at 50°C to deliver the security overlays OL-2 to OL-9.

### Preparation of the Security Documents SD-15 to SD-22

The overlays OL-02 to OL-09 were each laminated on a 500 µm opaque PETG core, available as PET-G 500 type 9311 from WOLFEN, resulting in the security documents SD-15 to SD-22. The lamination was performed using an Oasys OLA6/7 plate laminator with the settings: LPT = 115°C, LP = 40, Hold = 210 sec, HPT = 115°C , HP = 40 and ECT = 50°C.

### Laser marking the security documents SD-15 to SD-22

The security documents SD-15 to SD-22 were laser marked using a Rofin RSM Powerline E laser (10 W) with settings 36 ampere and 30 kHz at 100% power.

The laser marking results are shown in Table 5. In Table 5 it is indicated whether or not a laser marked image having a metallic appearance was obtained. In addition, the resolution of the laser marked image was visually evaluated as follows:
+ sufficient resolution
++ good resolution
+++ very good resolution

**Table 5**

| **Security Documents** | **Metallic Image** | **Resolution** |
|---|---|---|
| SD-15 | Yes | + |
| SD-16 | Yes | ++ |
| SD-17 | Yes | +++ |
| SD-18 | Yes | + |
| SD-19 | Yes | ++ |
| SD-20 | Yes | +++ |
| SD-21 | Yes | + |
| SD-22 | Yes | + |

From Table 5, it should be clear that with all security documents comprising an overlay laminated on a core support, wherein the overlay comprises a layer including a vinyl chloride copolymer, an image having a metallic look was obtained upon laser marking.

It is also clear that the addition of a copolymer of vinyl butyral in addition to the vinyl chloride copolymer results in a better resolution of the metallic image (see SD-21 and SD-24). This resolution is even more improved by adding carbon black (see SD-22 and SD-25).

### Example 3

The security document SD-16 was cutted in a standard format for ID cards.

One side of the card (the side where the overlay is present) was laser marked using a Rofin RSM Powerline E laser (10 W) with settings 36 ampere and 30 kHz at 100% power, resulting in an OVD covering the a complete side of the ID card. The other side of the ID card was not exposed, resulting in a white background colour.

An isotropic gloss structure of the OVD was obtained by choosing the appropriate laser marking parameters.

The gloss structure differentiation of the OVD was then measured as described below.

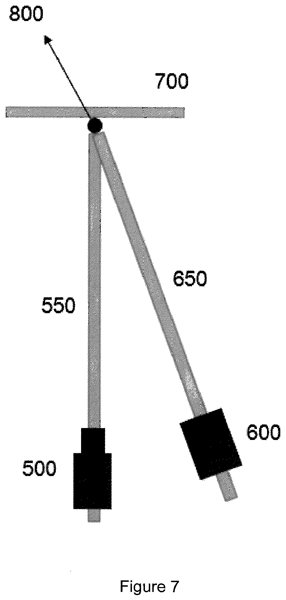

An image capture setup as schematically depicted in Figure 7 was used to measure the gloss structure differentiation.

The image capture setup included the following elements: i) an image digitization element (500), i.e. a camera, capable of image capturing of an intensity range of at least 12 bit with a suitable lens, ii) a light source (600) with an angular divergence of 18° full opening angle, iii) a stand for the card material under inspection (700).

The alignment of the elements resulted in the camera capturing the image under 0°, i.e. orthogonal to the sample, providing a field of view of at least 10 x 10 mm with an addressability of 40 micron/pixel or better. The lens of the camera was adjusted to provide a sharp image (i.e. the addressability was not limited by the resolution of the optical system to prevent that blurring would invalidate the analysis). The calibration of the pixel addressability was obtained from the image of a calibrated ruler. Depending on type of digital camera used, the addressability can be different in x and y direction.

The camera and light source were each mounted on a rail (respectively 550 and 650). Both rails came together in a center-of-rotation at the location of the surface of the sample (800).

In the setup, the camera was positioned to inspect the sample perpendicularly, i.e. under 0°, meaning parallel to its surface normal. The camera was not moved.

The rail of the light source (650) on the other hand was rotated to a different angle for each image captured. In this way, a series of images were captured, representing an angular scan of how the sample "looks like" as the angle of the light source (Θᵢₙ) changes. With the camera at position (5) in Figure 4, the inspection angle α₁ becomes thus equal to Θₒᵤₜ = Θᵢₙ. As the rail of the light source rotates, the light source still shines directly onto the sample and covers the full field of view captured by the camera.

Exposure conditions for image capture including intensity of illumination and shutter time of camera were chosen to not introduce clipping of glossy reflections arising from the gloss structure under inspection. The area under inspection contained either only a laser marked area, i.e. the OVD, or a non-laser marked area to provide a full image frame with the same gloss structure type for image analysis. So one angular scan image-set (kind of a small movie) is captured of a laser marked area of the card. Another angular scan image-set was captured for a non-laser marked area of the card. Capture conditions for both scans were the same (same integration time of the camera, same intensity of the light source, etc...), so as to guarantee that the resulting grey values in both image-sets could be fairly compared. Alternatively, the capture conditions were chosen different for both scans, provided the necessary grey value-corrections were applied afterwards: if both image-sets were captured with different integration times, and assuming the grey values are proportional to integration time, one can correct the grey values with the ratio of the integration times to compare grey values based on same integration time.

The image analysis used the following steps representing best practice for users skilled in the art.
(a) Dark correction of the images, i.e. subtracting a dark image of the camera obtained at same integration time and with no light falling onto the camera sensor.
(b) Flat field correction, i.e. correcting for non-uniform illumination of the sample, correcting for non-uniform gain- and offset of individual pixels of the camera sensor, correcting for blemishes in the optical path.
(c) Calculation of the two dimensional Fourier Transform of the image (2D FFT), taking the amplitude spectrum, squaring it in order to convert it to a power spectrum.
(d) The 2D power spectrum of the OVD laser marked with isotropic gloss structure had rotational symmetry . Therefore, the 2D power spectrum could be reduced to a 1 dimensional power spectrum curve by rotational averaging. In the process of rotational averaging, a set of frequency bands was introduced. The upper limit of one band was chosen equal to the lower limit of the next band, resulting in a set of adjacent frequency bins. The average value of the 2D power spectrum inside each frequency band were calculated: the lower limit of the frequency band defines the radius of a circular area-of-interest in the 2D image of the power spectrum. Same for the upper limit of the band. The associated power for all pixels inside these 2 circular areas-of-interest of the 2D power spectrum were averaged to obtain the power spectral value for that frequency band. Finally, a plot of frequency band on X-axis versus average power spectral value on Y-axis was made. This one-dimensional curve is called the gloss structure spectrum of the sample.
(e) The gloss structure spectra were then be plotted for each image of the angular scan image-set.
(f) The aforementioned analysis was carried out for both, laser marked and non-laser marked areas. Then the ratio of the gloss structure spectrum of laser marked area versus the spectrum of the non-laser marked area were calculated.
   (For meaningful use of ratio's it is important to use the same image capture conditions and image analysis parameters for both laser marked and non-laser marked areas as mentioned in paragraph [0218]).
(g) The maximum value of the ratio of the gloss structure spectra is a measure of "gloss structure differentiation" by quantifying how much more gloss structure power density is contained in the laser marked area versus the non-laser marked area.
(h) Using the overall maximum a.f.o. angle represents the mechanism of "peak picking" in visual assessment of structure differences by observers.

Table 6 summarizes the relation between structure element size (SES), structure cycle element size SCES (= 2 times SES) and the spatial frequency (SF) of the structural element.

**Table 6**

| SES (mm) | SCES (mm) | SF structural element (1/mm) |
|---|---|---|
| 0.04 | 0.08 | 2.5 |
| 0.1 | 0.2 | 5 |
| 0.2 | 0.4 | 2.5 |
| 0.4 | 0.8 | 1.25 |
| 0.5 | 1.0 | 1.0 |
| 1.0 | 2.0 | 0.5 |

Those skilled in the art of realize that highly scratched surfaces will introduce artefacts in the image capture, e.g. due to formation of halos, and this will also affect subsequent image analysis. Scratched areas should be avoided or compensated for, for example by levelling with a transparent, no scattering liquid or paste that has a refractive index within +/- 0.05 of the refractive index of the outer layer of the material.

In Figures 5, a captured image is shown together with its gloss structure spectrum of the laser marked OVD for five different measurement angles (11.6°, 24.4°, 32.5°, 39.3° and 45°).

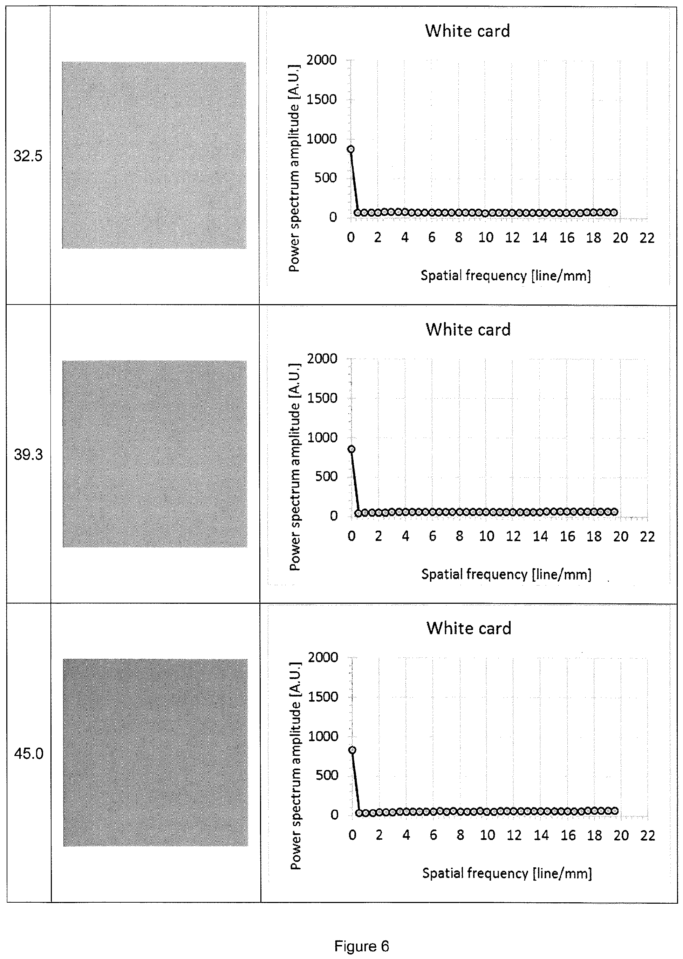

In Figures 6, a captured image is shown together with its gloss structure spectrum of a non-exposed area of the security card, for the same five measurement angles.

It is clear from Figure 5 that the OVD comprises gloss structural elements and that the appearance of the gloss structural elements in the OVD changes by varying the measurement angle (viewing angle or observation angle).

The GSD(1) as defined in the description, i.e. the ratio of a gloss structure spectrum of the OVD versus the gloss spectrum of a non-exposed area of the security document, was obtained for each measurement angle by dividing the gloss structure spectra of the OVD and the gloss structure spectrum of the non-exposed area of the security document at each measurement angle.

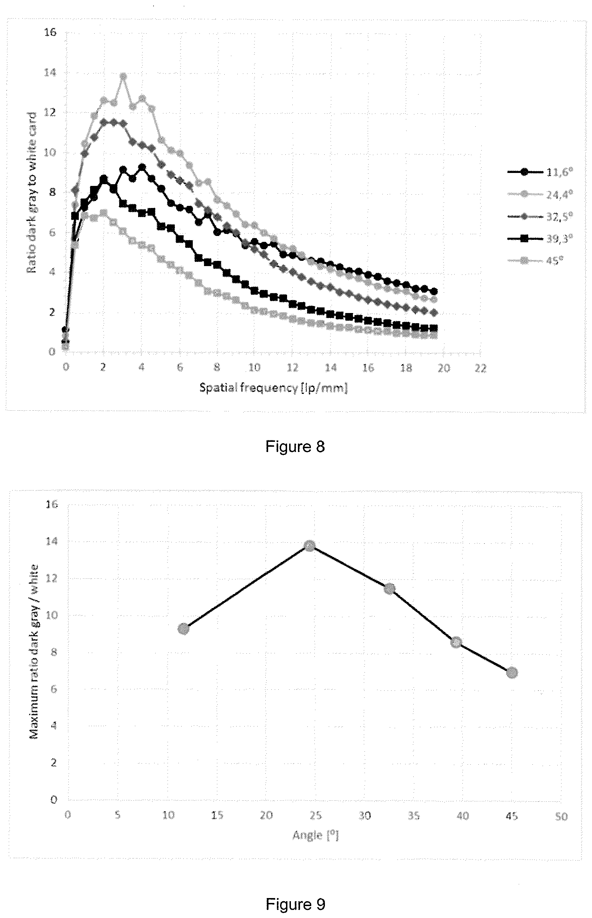

The resulting GSD(1) is shown in Figure 8. The maximum value of GSD(1) as function of the measurement angle is shown in Figure 9.

From Figures 8 and 9 it is clear it is clear that the GSD(1) changes with viewing angle and that for each viewing angle a maximum value of the GSD(1) is above 2.

The GSD(2) as defined in the description, i.e. the ratio of the gloss structure spectrum of the OVD at one observation angle α versus the gloss structure spectrum at any other observation angle α, was obtained by dividing the gloss structure spectrum of the OVD at all measurement angles by the gloss structure spectrum of the OVD at the measurement angle 45°.

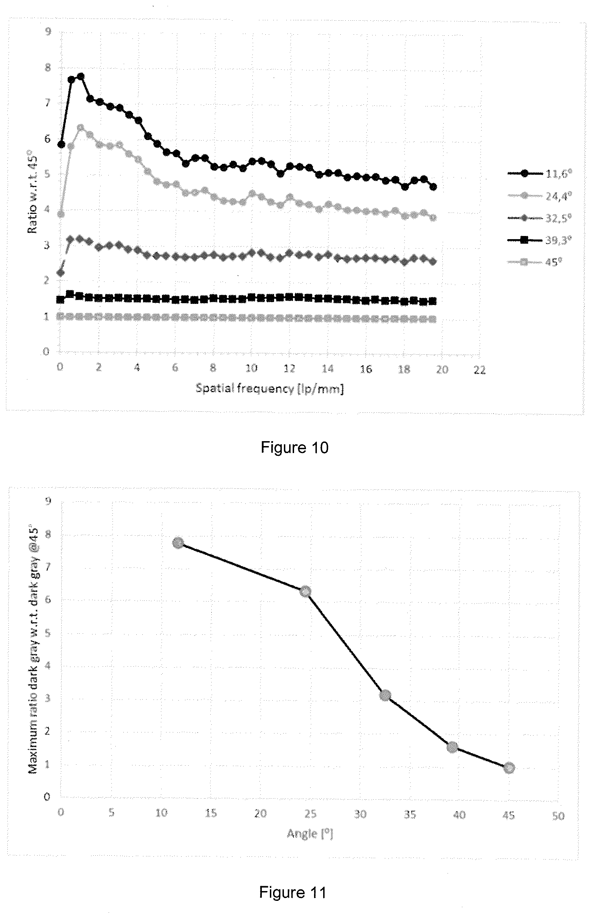

The resulting GSD(2) is shown in Figure 10. The maximum GSD(2) as function of the measurement angle is shown in Figure 11.

From Figures 10 and 11 it is clear that the ratio changes with viewing angle and that for a delta-angle α of at most 10 degrees the maximum value of the GSD(2) is at least 2.

The gloss of the security document was also measured. The results are given in Table 7.

**Table 7**

| | | Gloss | |
|---|---|---|---|
| | | 60° | 85° |
| Card (not used) | Non-marked area | 101.7 | 99.8 |
| | | | |
| Card (used) with scratches | Non-marked area | 64.8 | 85.6 |
| | OVD laser marked area | 51.8 | 80.8 |

Gloss values in Table 7 show that example card is highly glossy on the outset (60° gloss value > 85 GU) and that due to wear the gloss of the inspected card has reduced from highly gloss to semi gloss (60° gloss value between 35 - 70° GU). The ratio of sheen gloss between OVD laser marked versus non-marked area was 0.94 indicating that there is no substantial haptic difference between the marked and non-marked areas.

## Claims

1. A method of providing an Optical Variable Device (OVD) on a security document by exposing the security document with a laser, the security document comprising an overlay (10) provided on a core (300), wherein the overlay comprises a halogenated homo- or copolymer.

2. The method according to claim 1 wherein the overlay (10) comprises an adhesive layer (100) provided on a transparent support (200), the adhesive layer including the halogenated homo) or copolymer.

3. The method according to claim 2 wherein the transparent support (200) is a transparent biaxially stretched polyethylene terephthalate (PET) support.

4. The method according to any of the preceding claims wherein the halogenated homo- or copolymer is a vinylcloride or vinylidenechloride homo-or copolymer.

5. The method according to claim 4 wherein the halogenated homo- or copolymer is a vinylchloride-vinylacetate copolymer and wherein the amount of vinylchloride is at least 85 wt% based on the total weight of the copolymer.

6. The method according to any of the preceding claims wherein the core is a polyvinylchloride (PVC) core, a polycarbonate (PC) core, a polyethylene terephthalate (PET) core, or a synthetic paper core.

7. The method according to any of the claims 2 to 6 wherein the adhesive layer further comprises a laser additive.

8. The method according to claim 7 wherein the laser additive is carbon black.

9. The method according to any of the claims 2 to 8 wherein the adhesive layer further comprises a copolymer of vinyl butyral, vinyl acetate and vinyl alcohol.

10. The method according to any of the preceding claims wherein the OVD has a maximum value of GSD(1) over any observation angle α of at least 2, wherein GSD(1) is a ratio of a gloss structure spectrum of the OVD versus a gloss structure spectrum of a non-exposed area of the security document.

11. The method according to any of the preceding claims wherein the OVD has a maximum value of GDS(2) of at least 2 for any delta-angle α of at most 10 degrees, wherein GSD(2) is a ratio of the gloss structure spectrum of the OVD at one observation angle α versus the gloss structure spectrum at any other observation angle α and wherein delta-angle is the difference between the two observation angles.

12. The method according to any of the preceding claims wherein a difference in visual density (delta Dvis) between the OVD and non-exposed areas of the security document is at least 0.15.

## Patentansprüche

1. Ein Verfahren zum Bereitstellen eines optisch variablen Merkmals (OVD, *Optical Variable Device*) auf einem Sicherheitsdokument durch Belichtung des Sicherheitsdokuments mit einem Laser, wobei das Sicherheitsdokument ein auf einen Kern (300) angebrachtes Overlay (10) umfasst, wobei das Overlay ein halogeniertes Homo- oder Copolymer enthält.

2. Das Verfahren nach Anspruch 1, wobei das Overlay (10) eine auf einen transparenten Träger (200) angebrachte Klebeschicht (100) umfasst, wobei die Klebeschicht das halogenierte Homo- oder Copolymer enthält.

3. Das Verfahren nach Anspruch 2, wobei der transparente Träger (200) ein transparenter biaxial verstreckter Polyethylenterephthalatträger (PET-Träger) ist.

4. Das Verfahren nach einem der vorstehenden Ansprüche, wobei das halogenierte Homo- oder Copolymer ein Vinylchlorid- oder Vinylidenchlorid-Homopolymer oder -Copolymer ist.

5. Das Verfahren nach Anspruch 4, wobei das halogenierte Homo- oder Copolymer ein Vinylchlorid-Vinylacetat-Copolymer ist und wobei die Menge Vinylchlorid bei mindestens 85 Gew.-%, bezogen auf das Gesamtgewicht des Copolymers, liegt.

6. Das Verfahren nach einem der vorstehenden Ansprüche, wobei der Kern ein Polyvinylchloridkern (PVC-Kern), ein Polycarbonatkern (PC-Kern), ein Polyethylenterephthalatkern (PET-Kern) oder ein synthetischer Papierkern ist.

7. Das Verfahren nach einem der Ansprüche 2 bis 6, wobei die Klebeschicht ferner ein Laseradditiv enthält.

8. Das Verfahren nach Anspruch 7, wobei das Laseradditiv Ruß ist.

9. Das Verfahren nach einem der Ansprüche 2 bis 8, wobei die Klebeschicht ferner ein Copolymer aus Vinylbutyral, Vinylacetat und Vinylalkohol umfasst.

10. Das Verfahren nach einem der vorstehenden Ansprüche, wobei der maximale GSD(1)-Wert des OVDs zu einem beliebigen Beobachtungswinkel α bei mindestens 2 liegt, wobei GSD(1) ein Verhältnis eines Glanzstrukturspektrums des OVDs zu einem Glanzstrukturspektrum eines nicht-belichteten Bereichs des Sicherheitsdokuments ist.

11. Das Verfahren nach einem der vorstehenden Ansprüche, wobei der maximale GSD(2)-Wert des OVDs für einen beliebigen Delta-Winkel α von höchstens 10° bei mindestens 2 liegt, wobei GSD(2) ein Verhältnis des Glanzstrukturspektrums des OVDs bei einem Beobachtungswinkel α zum Glanzstrukturspektrum bei einem beliebigen anderen Beobachtungswinkel α ist und wobei der Delta-Winkel der Unterschied zwischen den zwei Beobachtungswinkeln ist.

12. Das Verfahren nach einem der vorstehenden Ansprüche, wobei ein Unterschied in visueller Dichte (Delta-Dvis) zwischen dem OVD und nicht-belichteten Bereichen des Sicherheitsdokuments bei mindestens 0,15 liegt.

## Revendications

1. Procédé pour appliquer une marque optiquement variable (OVD, *Optical Variable Device*) sur un document de sécurité en exposant le document de sécurité à l'aide d'un laser, ledit document de sécurité comprenant un cache (*overlay*) (10) appliqué sur un cœur (300), ledit cache contenant un homo- ou copolymère halogéné.

2. Procédé selon la revendication 1, **caractérisé en ce que** le cache (10) comprend une couche adhésive (100) appliquée sur un support transparent (200), ladite couche adhésive contenant l'homo- ou copolymère halogéné.

3. Procédé selon la revendication 2, **caractérisé en ce que** le support transparent (200) est un support de polyéthylène-téréphtalate (support en PET) transparent biaxialement étiré.

4. Procédé selon l'une quelconque des revendications précédentes, **caractérisé en ce que** l'homo- ou copolymère halogéné est un homo- ou copolymère de chlorure de vinyle ou de chlorure de vinylidène.

5. Procédé selon la revendication 4, **caractérisé en ce que** l'homo- ou copolymère halogéné est un copolymère de chlorure de vinyle et d'acétate de vinyle et que la quantité de chlorure de vinyle s'élève à au moins 85% en poids par rapport au poids total du copolymère.

6. Procédé selon l'une quelconque des revendications précédentes, **caractérisé en ce que** le cœur est un cœur de polychlorure de vinyle (cœur en PVC), un cœur de polycarbonate (cœur en PC), un cœur de polyéthylène-téréphtalate (cœur en PET) ou un cœur de papier synthétique.

7. Procédé selon l'une quelconque des revendications 2 à 6, **caractérisé en ce que** la couche adhésive contient un outre un additif pour laser.

8. Procédé selon la revendication 7, **caractérisé en ce que** l'additif pour laser est le noir de carbone.

9. Procédé selon l'une quelconque des revendications 2 à 8, **caractérisé en ce que** la couche adhésive contient en outre un copolymère de butyral de vinyle, d'acétate de vinyle et d'alcool vinylique.

10. Procédé selon l'une quelconque des revendications précédentes, **caractérisé en ce que** l'OVD présente une valeur GSD(1) maximale par rapport à n'importe quel angle d'observation α d'au moins 2, ladite valeur GSD(1) étant un rapport d'un spectre de structure brillante de l'OVD à un spectre de structure brillante d'une zone non exposée du document de sécurité.

11. Procédé selon l'une quelconque des revendications précédentes, **caractérisé en ce que** l'OVD présente une valeur GSD(2) maximale pour n'importe quel angle delta α maximal de 10° d'au moins 2, ladite valeur GSD(2) étant un rapport du spectre de structure brillante de l'OVD à un angle d'observation α au spectre de structure brillante à tout autre angle d'observation α et ledit angle delta étant la différence entre les deux angles d'observation.

12. Procédé selon l'une quelconque des revendications précédentes, **caractérisé en ce qu'**une différence de densité visuelle (Dvis delta) entre l'OVD et des zones non exposées du document de sécurité s'élève à au moins 0,15.
